# EUROPEAN PATENT APPLICATION

(11) **EP 0 841 005 A1**
(43) Date of publication of application: **13.05.1998**
(21) Application number: 97119433.7
(22) Date of filing: 06.11.1997
(51) Int. Cl.: A01K 61/00

(54) **Cultivation method of pearls**

(30) Priority: 11.11.1996 JP 315443/96
(71) Applicant: Uehara, Noriko, Kurashiki-City, Okayama Prefecture (JP)
(72) Inventor: Uehara, Noriko, Kurashiki-City, Okayama Prefecture (JP)
(74) Representative: Misrachi, Alfred

(57) **Abstract**

Seawater- or freshwater-dwelling bivalve shells with pallium piece and/or nucleus inserted are cultured in a rearing installation built on land under controlled conditions so as to avoid unfavorable natural conditions such as cold water temperature or natural disasters such as harmful tide, and the culture is promoted with use of feed comprising defatted powder milk as main component. This component features in promotion of nacreous layer growth as compared with conventional feed of plankton. The invention is preferably applied to the seawater-dwelling bivalve shells, such as pearl oyster shell (pinctada martensii) called Akoyagai in Japanese, black lip shell (pinctada margaritifera), golden lip shell (pinctada maxima); the freshwater-dwelling bivalve shells such as fresh water mussel (hyriopsis schlegeli) called Ikechogai in Japanese, another kind of fresh water mussel called Hireikechogai in Japanese. Therein the invention is applicable to mother shells prior to sit for the insertion operation, but also larvae or spat.

## Description

### 1. Field of the Invention

This invention relates to a process for aquaculture of pearls using a rearing installation built on land, more particularly to a process for breeding bivalve shells dwelling in seawater or freshwater to grow nacreous layer in their organ, during stay in saline water having a composition substantially same as seawater or freshwater, by giving the feed comprising defatted milk as main component. This invention is applicable to a commercial scale rearing tank and down to an aquarium pot for home leisure.

### 2. Description of the Related Art

Conventionally, the step of spore collection of the pearl oyster shell (pinctada martensii, Akoyagai in Japanese), for example, has been conducted on land and its growth to pearl has been conducted in natural seawater, wherein the plankton has been bred artificially and such plankton has been the feed to breed the shells, but the artificial breeding of the plankton is technically difficult and demands professionals skilled in such art.

Further a plankton breeding chamber requires equipment with special devices and a large amount of chemicals are necessary for such breeding, ensuing therefrom an enormous investment for land acquisition and installations, wherein such light amount as 6,000 to 10,000 lux is necessary to illumination over days and nights for the reason that the plankton breeds with aid of the photosynthesis. As a result, a large illuminating facility with fluorescent lamp and its operation cost has caused economic difficulties.

Conventional pearl culture has included the steps of rearing spat (young shells) or shellfish larvae in natural seawater for sometime after the spore collection and then rearing such shells in pearl nets immovably set at a raft or rope with use of a floating ball and anchor. However, such conventional culture by the way of submerging seawater has not been protected from natural disasters such as earthquakes, tidal waves, heavy rains, furious heat, furious cold, red tide. Sometimes the culture installation as well as shells were destroyed utterly by such natural disaster. Further when temperature of dwelling seawater drops under 15 °C, plankton which becomes the feed to pearl oyster shells turns to be spore and embeds itself into sea bottom mud.

Accordingly little plankton remains in seawater and in turn little feed to the shells. Thus the shells hibernate for half an year about from November to the next April, during which time the shell rearing as well as the growth of nacreous layer are stopped. Consequently experiences show that the mortality rate of shells during the rearing period scarcely lowers under several percentages due to unexpected causes with seawater.

### Summary of the Invention

As described above, the pearl culture dependent on natural seawater is at risk of shell hibernation for about half an year due to seawater temperature, and of little protection from natural disasters including earthquakes, tidal wave, heavy rains, furious heat and cold, red tide, and the same is generally true with the culture dependent on natural rivers or lakes. Further the feed for shells to be supported by the plankton breeding involves technical difficulties as well as enormous cost. In view of such conventional art, this invention avoids these disadvantages in favor of creating environments separate from natural water resources such as sea, river, lake and of setting up new environments for fishes and shellfishes with superior controllability on such separate environments so as to be suitable to the culture of bivalve shells, wherein the shells are bred with the feed available with little difficulty and thus faster growth of pearls is attained.

As noted above, this invention intends the culture of bivalve shells in an aquarium or rearing tank built on land wherein the task to be overcome lies in how to breed plankton. The plankton breeding involves technical difficulty and so costly operation as noted above, further the plankton under breeding reacts to changes in breeding conditions so sharply that stable breeding conditions are very difficult to obtain.

Our studies on the feed in place of the plankton prove that an emulsion prepared from defatted milk, its convenient from is powdered from, and water, that is, fine particles of the defatted milk turn partially to be something easily digestible by such shells through actions by bacteria dwelling in water, including the genus Acinectobactor, Vibrio, Flavobacterium, Pseudomonas, and that such bacteria dwelling in digestive organ of the shells promote the digestion. Further the particles dispersed in water are so fine and are found to be the feed suitable to the sell larvae or spat (young shells).

In addition to tests to mother shells, the studies prove that the shell larvae or spat have been successfully bred for long term with use of an emulsion prepared from defatted milk. Further addition of Jew's marrow (Corchorous olitorius), a kind of plant, to the defatted milk has been found to increase the shell's choice. These findings attains this invention.

In summary, this invention relates to a process for the aquaculture of seawater-dwelling bivalve shells capable of forming or growing the nacreous layer with nucleus and/or pallium piece inserted, during stay in seawater or saline water having a composition substantially same as seawater stored in a rearing installation built on land, with use of the feed comprising defatted milk as main component. Therein, preferred are; circumstances wherein the presence of bacteria including the genus Acinectobactor. Vibrio, Flavobacterium, and Pseudomonas; and the feed in cluding Jew's marrow (corchorous olitorium) and calcium carbonate in addition to defatted milk; and of bivalve shells, pearl oyster shell (pinctada martensii), called Akoyagai in Japanese, black lip shell (pinctada margaritifera), golden lip shell (pinctada maxima), and another kind of pearl oyster shell (pinctada penguin), called Mabegai in Japanese.

Further this invention includes a process for the aquaculture of freshwater-dwelling bivalve shells capable of forming or growing the nacreous layer with nucleus and/or pallium piece inserted, in a rearing installation on land, with use of the feed comprising detailed milk as main component. Therein, preferred are; the feed comprising Jew's marrow, and calcium carbonate in addition to defatted milk; and of freshwater-dwelling bivalve shells, fresh water mussel (hyriopsis schlegeli) called, called Ikechogai in Japanese, another kind of fresh water mussel called Hireikechogai in Japanese.

Broadly, this invention relates to a process for the aquaculture of seawater-dwelling bivalves' larvae or spat collected in natural sea or bred by artificial fertilization and hatching of mother shells, during stay in seawater or saline water having a composition substantially same as seawater stored in a rearing installation built on land; or the culture of freshwater-dwelling bivalves' larvae or spat collected in natural rivers or lakes or bred by artificial fertilization and hatching of mother shells, during stay in freshwater in a rearing installation built on land; wherein the feed comprising defatted milk as main component is used. Further comprised is the rearing installation built on land including a filter tank tied with piping for recirculation of rearing water and a filter medium including activated carbon or carbonized materials.

Herein, the bivalve shells are those which are capable of forming the nacreous layer covering a nucleus, upon such being inserted into their organ, for example Akoyagai, shell genus mainly employed for pearl culture. The rearing installation built on land is such installation as included a water mass or area capable of rearing fishes or shellfishes and is built separate from natural seas, rivers, lakes so that rearing conditions can be artificially controlled. The spore collection is collection of shell larvae, natural or by artificial fertilization, to grow them up to spat or young shells. Details of this invention will appear in the following.

### Detailed Description of the Invention

The inventive pearl culture involves the use of seawater-dwelling bivalve shells with insertion of nucleus and/or pallium piece collected from shells capable of forming nacreous layer. That is, this invention covers the shells provided with nucleus together with pallium piece and also the shells provided with pallium piece and no nucleus.

Insertion from outside, that is, insertion of nucleus and/or pallium piece collected from the shells capable of forming nacreous layer is intended for that layer to grow around the inserted matter. The pallium piece is normally prepared from pieces obtained from shells of the same kind and the nucleus is prepared to be spherical cut out from a thick shell valve and is inserted together with pallium piece. The nucleus may be formed to be like a western pear or other various forms. Ma terial shells for the nucleus are, for example, shell valves from Anodonta woodian found at Mississippi river, or agalmatolite or plastics.

As for the bivalve shells, any kinds of shells capable of forming nacreous layer are available, either of seawater or freshwater-dwelling ones. Exemplary seawater-dwelling shells are: pearl oyster shell (pinctada martensii) called Akoyagai in Japanese, Taiwan Akoyagai in Japanese, golden lip shell (pinctada maxima), black lip shell (pinctada margaritifera), another kind of pearl oyster shell (pinctada penguin) called Mabegai in Japanese. Of them, Akoyagai, golden lip shell, black lip shell, and Mabegai are preferable. Exemplary freshwater-dwelling shells are: fresh water mussel (hyriopsis schlegeli) called Ikechogai in Japanese, Kawashinjugai in Japanese, Hireikechogai in Japanese, Christaria plicata spatiosa called Karasugai in Japanese, Anodonta woodian called Dobugai in Japanese, Anodonta woodian culipygos called Marudobugai in Japanese. Of them, Ikechogai, and Hireikechogai are preferable.

The invention involves the use of an artificial saline water having a composition substantially same as natural seawater.

Recently natural seawater or riverwater is generally contaminated or polluted and intact seawater or riverwater as collected possibly contains germs harmful to the shells in this invention. In particular such water affects to the shells sit for the operation for the insertion as noted, since the shells just after such operation are less resistant to affection from the circumstances, and on that account the mortality sharply increases at such a chance. Preferred is the artificial preparation of saline water having a composition substantially same as seawater or collection of uncontaminated water and purification thereafter by filtration or other means. However, the purification herein means removal of minute dust and floating matter and does not mean complete removal of plankton or bacteria dwelling therein.

In this invention therefore, the artificial preparation of a saline water having a composition substantially same as seawater means not only the sameness in inorganic salt components, and chemical properties including pH value, but also the presence of bacteria suitable to the culture of pearls, "a composition having substantially same as seawater" means such content. Such water may be prepared by blending old saline water having acceptable composition proved by field use and freshly prepared saline water or freshly collected seawater after the purification.

Bacteria culture tests on samples collected from seawater which has long been used for breeding the bivalve shells capable of forming nacreous layer with use of feed comprising defatted milk, prove that a large amount of bacteria belonging to the genus Acinectobactor, Vibrio, Flavobacterium, Pseudomonas is bred.

However, less amount of bacteria is found if a saline water had only a composition technically same (inorganic components, pH value) as seawater with no further beneficial bacteria, wherein in such less bacteria case, shells intake amount of the feed and growth rate are proved to be inferior. Especially high mortality rate after sitting for the insertion operation.

Such bacteria are considered to breed not only in seawater or saline water stored in a rearing tank, but also considered to be swallowed into shells' bodies and to breed inside their digestive organ, and in turn to promote the digestion with a result of high intake and growth.

In order to the promotion of bacteria breeding, preferred is setting up of a space favorable to bacteria breeding in the recirculation system for the water, such as a space filled with porous materials. Such porous material space is preferably set up for overall purposes inclusive of filtration and adsorption of impurities, and a suitable filler material is activated carbon, preferably in powder form, in view of desirable functions for filtration and impurity adsorption.

This invention involves performing the culture of pearls in a rearing installation built on land. This installation built on land means an accommodation so as for fishes and shellfishes to breed in a water mass or water area separated from natural rivers, lakes and seas with artificial controllability for the culture. Herein this includes a commercial scale such as pool, aquarium, and down to an aquarium pot for home leisure.

Thus necessary conditions including water quality, temperature, light illumination should de controllable for the installation. Further dissolved oxygen rate, feed rate, illumination amount and other factors may be maintained best to the shell breeding. Further devices for regular removals of excrements and other sediments, and recirculation and filtration devices allowed for bacteria breeding to support the shell culture may be equipped to establish a closed system in this invention. These form a valuable feature of this invention.

This invention involves the use of defatted milk as main component of the feed. The defatted milk in powder form is usually called "skim milk" which is produced by vacuum drying of remnant liquor after removal of butter component from bovine raw milk, and this is widely known and produced in large amount and used as feed to livestock, and has a popular price.

Conventional pearl culture depends on the use of plankton as feed, wherein artificially bred plankton has been applied. However, as noted above, the culture of plankton includes much difficulty in technical as pect and often comes short of necessary feeding. Further its enormous in stallation investment as well as operation cost makes difficult the feasibility of the pearl culture. The use of defatted bovine powder milk is also a valuable feature of this invention.

Bivalves shells including pearl oyster shell (pinctada martensii) Akoyagai intake, in addition to live plankton, denatured necrocoenosis caused by action of bacteria, and other floating minute organic entities (detritus). A number of experiments in pursuit of substitutes for plankton and detritus prove that defatted milk is suitable.

Defatted milk, convenient form is powder milk, is easily converted into an emulsion, and dispersed particles or part of such particles are denatured by action of bacteria belonging to the genus Acinectobactor, Vibrio, Flavobacterium, and Pseudomonas, and such denatured entities be come the feed suitable to the bivalve shells including pearl oyster shell (pinctada martensii) Akoyagai as well as plankton. This fact is valid for not only grown shells, but also larvae and spat, and further is valid for bivalve shells dwelling in freshwater including fresh water mussel (hyriopsis schlegeli) Ikechogai as well as to seawater dwelling shells.

As will appear in the later, bivalve shells dwelling in seawater in cluding pearl oyster shell (pinctada martensii) Akoyagai with nucleus and pallium piece inserted for growing nacreous layer or bivalve shells dwelling in freshwater including fresh water mussel (hyriopsis schlegeli) Ikechogai with pallium piece inserted collected from other shell were bred or reared for a long term with use of the feed comprising defatted powder milk as main component. As a result, it is proved that both mother shells and their nacreous layer have smoothly grown up. This fact is observed to be related to the reasons that nutrient components comprised in defatted milk is so like plankton and that defatted milk readily becomes dispersed particles in seawater or freshwater to turn to such particles having several µm in size like real plankton or minute organic floating entities (ditritus), and that on such account the choice to the shells is enhanced.

Further defatted milk, conveniently in powder form, is so stable and easy in procurement as compared with plankton which is so difficult in its breeding, wherein enormous investment to rearing installation, electrical power facility and its operation cost are free from the case of defatted milk. Further, it is found that the addition of Jew's marrow into the feed comprising defatted milk as main component enhances the choice to sea-dwelling bivalve shells or freshwater-dwelling bivalve shells and that the addition of calcium carbonate greatly enhances growth of nacreous layer, since calcium carbonate is turned to main component of growing nacreous layer.

Jew's marrow content based on 100 parts of defatted powder milk preferably ranges from 2 parts as lower limit and up to 40 parts as upper limit, and calcium carbonate content based on the same preferably ranges from 15 parts as lower limit and up to 40 parts as upper limit. The feed may be added with other nutrients including the conventional plankton.

Broadly, this invention relates to a process for the culture of seawater-dwelling bivalves' larvae or spat collected in natural sea or bred by artificial fertilization and hatching or mother shells, during stay in seawater or saline water having a composition substantially same as seawater stored in a rearing installation built on land; or the culture of freshwater-dwelling bivalves' larvae or spat collected in natural rivers or lakes or bred by artificial fertilization and hatching or mother shells, in freshwater in a rearing installation built on land; wherein the feed comprising defatted milk as main component is used.

In the aquiculture of pearl shells, it is so important to breed or rear larvae or spat up to mother shells so sturdy as to be resistant to overcome the operation of inserting nucleus or pallium piece, and the feed comprising defatted powder milk as main component is suitable to breed such shells, that is, the feed comprising defatted milk is effective to breed from the stage of larvae or spat up to so sturdy mother shells capable of sitting for the insertion operation.

In the breeding process, breeding of larva, spat has been known risky stage. However, effectiveness of the feed comprising defatted milk is observed to be related to the reasons that nutrient components comprised in defatted milk is so like plankton and that defatted milk readily turns to dispersed particles in sea-water or freshwater or to such particles having several µ in size like real plankton or minute or ganic floating entities (ditritus), and that on such account the choice to the shells is enhanced. Addition of Jew's marrow into the feed further enhances the choice to larva or spat as is valid for mother shells. The breeding of larva or spat by the inventive installation built on land performs more excellent attainment in the point of larger growth rate and lower mortality as compared with breeding of mother shells in natural seas or lakes.

This invention extends to comprise basic structure or configuration of an installation for the pearl culture. Normally a rearing tank is at tached with recirculation piping for recirculating water or liquor between inside and outside the tank, and a filter tank is tied with such piping. The circulation piping may be set up either inside or outside the tank, however, setting up outside is preferable for convenience in regular cleaning of the filter tank and exchange of filter media. Bivalve shells for the culture are susceptible or risky with water quality, sharp rise in the mortality and lower growth rate due to contamination. In particular, shells immediately after sit for the insertion operation become less resistant to environmental affection and also at minimum growth. On such accounts, normally bottom liquor is removed and filtered to eliminate floating contaminant followed by recirculation to the tank.

This invention involves the use of activated carbon or carbonized material as filter media to be packed in the filter tank. In the case of crushed carbonized particles, it serves elimination of floating contaminant, but also serves as culture medium to breed bacteria dwelling in the tank with its porous structure, that is, such porous material is effective to promote breeding of bacteria such as the genus Acinectobactor, Vibrio, Flavobacterium, Pseudomonas, useful to the pearl culture.

The activated carbon has such a large surface as several hundreds m² or larger area for 1 gram and exhibits strong adsorption. Any carbonized materials exhibiting such a high adsorption are applicable. The activated carbon is normally produced from carbonization of the coconut shell or timber or coal, and the activation is caused by steam or carbon dioxide at high temperatures or by zinc chloride, phosphoric acid or concentrated sulfuric acid. Any origins or processes are applicable.

The activated carbon is a non-polar adsorbent having so unique property of adsorbing almost all gaseous or liquid substances. This will remove contaminant and other harmful ones existing in a rearing tank and act as culture media of bacteria because this is accumulation of porous structures.

As for the filter media, the activated carbon or other carbonized material may be mixed with sand or coral sand. The coral sand is comprised of much calcium carbonate and on that account, this will function as filter media and will act as pH regulator by self dissolution so as to recover if a pH value lowers, and will act as culture media for bacteria as noted above. Other filter media may mixed further.

The inventive rearing installation built on land comprises: (A) a rearing tank, (B) feed preparation tank, (C) filter, and (D) environmental control board. (A) Rearing tank is equipped, inside thereof, to pour the feed liquor spraying over water surface and rearing water is partially removed from a vent disposed at the tank bottom and then sent to the filter. Thereafter filtered water will be ejected through a jet pipe directed to be tangential to the side wall of tank and disposed above the tank water surface so that circumferential or circulating flow will occur. The tank bottom is formed to be a funnel with gentle slope wherein at the bottom center the vent is disposed for removing sediments or bottom lying water.
(B) Feed preparation tank is equipped with a scale for measuring the defatted powder milk, feeder, dissolving vessel equipped with stirrer. The environmental control board is designed to control the feeding so that supplying the feed will take place regularly in time.
(C) The filter media packed in the filter is controlled to comprise at least one of filter media materials selected from the group consisting of the activated carbon, other carbonized materials, sand, and coral sand, and as noted above, the filler media will act not only as purifier, but also culture media for bacteria.
(D) Environmental control board is equipped with fluorescent illumination control, tank water temperature control, air blow control, and other controllers related to operations for the installation. Through these controls, the environments for bivalve shells dwelling in the tank are maintained to be optimum for growth or breeding, the inventive process performs faster culture and attains better quality of nacreous layer as compared with the culture in natural environments.

The inventive culture is capable of maintaining an optimum temperature 22-23 °C through year for pearl oyster shell (pinctada martensii) Akoyagai, for instance, there is no hibernation and the growth progresses through year. On that account, feed intake by the shells is much higher, and in proportion to that, the inventive growth rate is about 2 to 3 times as compared to the natural culture, and as a result larger diameter pearls are obtained. Further, in view of difficulty in breeding plankton for need to the natural culture, and in view of the risk from natural disasters, This invention has extremely great merits in the pearl culture art.

### Brief Description of the Drawing

Fig. 1 shows an example of growth curves for aquaculture of Akoyagai.

Fig. 2 shows an example of growth curves for aquaculture of golden lip.

Fig. 3 shows an example of growth curves for aquaculture of black lip.

Fig. 4 shows an example of growth curves for aquaculture of Ikechogai.

### Description of Embodiments of the Invention

In the case where the inventive culture is performed of bivalve shells capable of forming nacreous layer with pallium piece and nucleus inserted, it is assumed that a rearing tank is attached with a tank for dissolving defatted powder milk, piping for recirculating the tank water, a filter packed with activated carbon and coral sand, and a feeder of seawater, and further attachments are devices for regulating the tank water, for air blowing, and for fluorescent illumination. Further assumed are that the tank water is always maintained by recirculation and filtration, and a water temperature, a pH value, and an oxygen dissolved amount are also controlled at prescribed conditions. Therein pearl oyster shell (pinctada martensii) Akoyagai after 2 years since the spore collection are sit for the insertion operation of pallium piece and nucleus for nacreous layer, and then such shells are cultured in the rearing tank with allowance for 2 to 3 liter space each shell.

Therein, seawater to be used in the rearing tank may be recirculated alter filtering new natural water through the activated carbon or coral sand, crushed oyster shell packed in the filter tank. However, preferred is blend use of waters from artificially prepared saline water having a substantially same composition as seawater and from the tank water containing abundant bacteria bred through a long term culture and capable of promoting digestion of defatted milk by shells.

The feed is comprised of: 5 wt. parts of Jew's marrow powder and 20 wt. parts of calcium carbonate fine powder based on 100 wt. parts of de fatted powder milk, and these mixture is dissolved or dispersed sufficiently into seawater by the feed preparation tank. The feed is regularly poured into the rearing tank by a piping valve. Nutrient components of defatted powder milk and those of plankton which turns to the feed to pearl oyster shell (pinctada martensii) Akoyagai in the natural seawater culture are shown in Table 1, wherein nutrients of Jew's marrow is included.

**TABLE 1**

| (Per Sample 100 g) | | Plankton | Skim Milk Powder | Jew's Marrow |
|---|---|---|---|---|
| Heat Content (kcal) | | 510 | 357 | |
| Water Content (g) | | 4.8 | 4.0 | |
| Protein (g) | | 38.3 | 34.8 | |
| Lipid (g) | | 19.3 | 0.8 | |
| Carbohydrate | Glucide (g) | 30.4 | 52.4 | |
| | Fiber (g) | 0.4 | - | |
| Ash (g) | | 6.8 | 8.0 | |
| Inorganic Substance | Calcium (mg) | 118 | 1000 | 410 |
| | Phosohor (mg) | 828 | 1000 | 98 |
| | Iron (mg) | 53 | 1 | 3 |
| | Sodium (mg) | 34 | 550 | |
| | Potassium (mg) | 1435 | 1800 | 920 |
| Vitamins and Others | Retinol µg) | | | 10826 |
| | Carotene µg) | | | |
| | Vitamin A (IU) | 200.0 | 20.0 | 0.7 |
| | Vitamin B₁ (mg) | 5.5 | 0.3 | 5.0 |
| | Vitamin B₂ (mg) | 4.0 | 1.6 | |
| | Niacin (mg) | 11.8 | 1.1 | |
| | Vitamin C (mg) | | 5.0 | |

As shown in Table 1, nutrients contained in defatted powder milk is so close to those in plankton, but pearl oyster shell (pinctada martensii) Akoyagai and other shells' choice toward the feed is unable to be considered by composition of the nutrients, wherein there would be unique habit or preference owned by living entities. Akoyagai and other bivalve shells eat on plankton, plankton necrocoenosis and denatured thereof by action of bacteria, and seawater floating minute organic entities (detritus).

It is considered that finely dispersed particles of defatted powder milk in seawater, and part of such particles and partially denatured ones by action of bacteria belonging to the genus Acinectobactor, Vibrio and others turn to the feed to the shells. However, in view of the fact that pearl oyster shell (pinctada martensii) Akoyagai cultured for a long term with use of only defatted powder milk produces high quality pearls, a large factor lies in similarity of nutrients contained in defatted powder milk to those of plankton.

It is observed that mixing of Jew's marrow into defatted powder milk into the feed preparation enhances choice to the shells and in turn growth rates of shell bodies and nacreous layer. Though nutrients of jew's marrow are so different from plankton, it is considered that, after converted into gel status, Jew's marrow would promote bacteria's action so as for defatted powder milk to become something more choice to bacteria or it would act as culture media for bacteria breeding. Calcium carbonate is added to effect growth of the nacreous layer.

It is observed that the culture of pearl oyster shell (pinctada martensii) Akoyagai with use of defatted powder milk breeds bacteria be longing to the genus Acinectobactor, Vibrio, Flavobacterium, Pseudomonas in seawater, and in turn, it is considered that these bacteria would de naturalize partially defatted powder milk to enhance choice to the shells and to promote digestion inside digestive organ of the shells. The rearing tank is attached with a filter tank packed with the activated carbon and coral sand for filtering and recirculating seawater in the tank. In addition to purification of seawater, activated carbon and coral sand, for its porous structure, acting as filter media and also as culture media for bacteria breeding. Therein main component of coral sand is calcium carbonate, part of which would dissolve into seawater and supplement calcium ions which have been lost by shells' intake and in turn avoid lowering of pH.

The bottom of rearing tank is formed into a funnel with gentle slope and at the bottom center impurities derived from excrements from the shells and other causes are collected or precipitated. Such sediments are removed by regular openings of a piping valve to avoid a pH lowering due to accumulation of such excrements. At the same time, seawater in the rearing tank is supplemented from a water supply source to maintain a fixed water mass. The tank water is maintained of its temperature at 22-23°C optimum to growth of pearl oyster shell (pinctada martensii) Akoyagai and circulation of tank water is stopped for some time after the feeding to accord with shell's habit, and concurrent to the feeding, fluorescent lamp is illuminated for prescribed time with regulated light amount, and other environmental factors including the oxygen dissolved amount is also controlled.

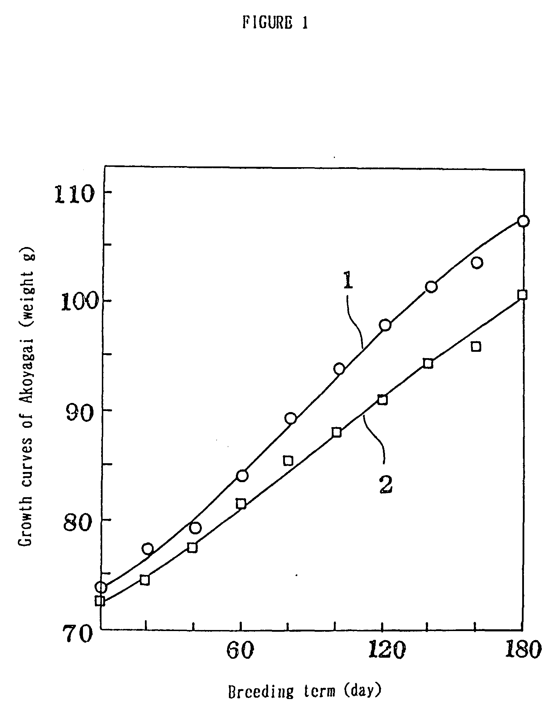

Fig. 1 slows weight change of growth of pearl oyster shell (pinctada martensii) Akoyagai which were sit for the operation of nucleus insertion and bred for 6 months in the rearing installation as described with use of the feed comprising defatted powder milk, Jew's marrow, and calcium carbonate according to rearing time course. Therein shell weight data were recorded with 10 pieces having an average weight at start and midway weights were recorded by the same average (curve 1).

As control or comparative example which employed conventional plankton as feed and otherwise the same breeding environments, the comparative weight change is also shown in Fig. 1 (curve 2).

As the result shows, monthly increment in weight for Akoyagai (pinctada martensii) bred with the feed comprising defatted powder milk as main component is 7.0% and similar increment for Akoyagai with the feed of conventional plankton is 5.4%, that is, the breeding depending on defatted powder milk results in superior growth to the breeding depending on plankton. Visual inspection of nacreous layer after 6 months found that the breeding on defatted powder milk was superior.

The culture of pearl oyster shell (pinctada martensii) Akoyagai in natural seawater includes winter season, when seawater temperature becomes lower than the optimum range for about 6 months when growth of shells as well as nacreous layer are stopped, and except such season, as the water temperature besides outside the optimum range of 21-25 °C, the growth rate of nacreous layer decreases and the shell mortality increases. This invention always permits the optimum temperature of about 23 °C, and in turn attains 2 to 3 times faster growth rate than the conventional culture and the mortality as low as 2 to 3 %. Recently it is reported that such disastrous mortality as large as 40-60% happens possibly because of some ecological changes. Pearls obtained by the present invention are bigger in size and nacreous layer is more uniform. In view of these merits, the inventive process is remarkably superior than the conventional one.

In the next example, shell larvae or spat collected by spore collection in natural sea or artificial fertilization were bred with use of the feed comprising defatted powder milk mixed with Jew's marrow after sufficient mashing. The shells grew so smooth to mother shells and the mortality therein was so lower as compared with the culture in natural seawater. Defatted powder milk is turned into such fine particle diameters as 0.12 µm and on that account it is possible that larvae or spat can intake such particle feed.

In another example, golden lip shells (pinctada maxima) called Shirochogai in Japanese, sit for insertion operation of pallium collected from other shells capable of forming nacreous layer and nucleus were bred in a commercial rearing tank which was much the same as in the previous Akoyagai (pinctada martensii) example and was stored with saline water having substantially the same composition as seawater. The installation and operation control as a whole were much the same as the previous Akoyagai example. Therein the insertion operation was conducted to golden lip shells (pinctada maxima) after 2 years since the spore collection and bred in the tank with a space of 10-12 liters each shell, and water temperature was maintained at the optimum temperature range of 24-26 °C foe golden lip shells (pinctada maxima).

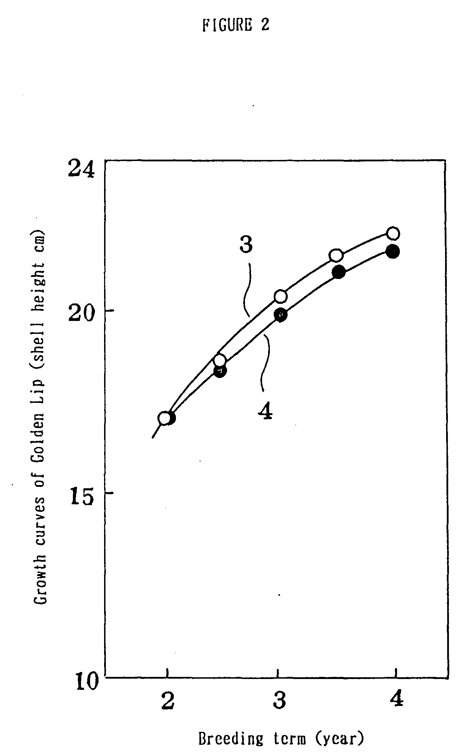

Fig. 2 shows growth rate for 2 years in reference to change in shell heights for the case wherein the feed was mixture of defatted powder milk, jew's marrow, and calcium carbonate having the same composition as in the previous Akoyagai (pinctada martensii) example. Therein 10 pieces of the shells having an average size were selected at start and the shell height data in time course were shown by the same average (curve 3). The result of the case wherein conventional plankton was used as feed and otherwise in the same environments is shown as comparative (curve 4).

The mortality observed in such optimum environments with the feed comprising defatted powder milk as much component was about 10-12 % immediately after the insertion operation and then lowered to about several percents. Most shells grew up smooth and growth rate was 3-4% superior to the case of feeding plankton. This proves that defatted powder milk is also suitable to culturing golden lip shells (pinctada maxima). Visual inspection of pearls after 2 years breeding showed smooth growth of nacreous layer and as good quality as cultured in natural seawater.

Golden lip shells (pinctada maxima) are naturally dwelling in seawater in subtropical zone and on that account are suitable to higher water temperatures, and in turn the culture of this genus shells is difficult in Japan except at limited sea area. Therein lowering of water temperature, for instance winter season, declines or stops the growth of shells as well as nacreous layer as such temperature becomes out of the optimum temperature range of 24-27 °C, and further the mortality rate increases and nacreous layer results in thinner as compared with original product in South seas area.

However, this invention is capable of readily regulating the water temperature at the optimum temperature range, and the shell's choice to defatted powder milk is as well as to plankton in natural seawater and in turn faster growth of nacreous layer is attained as compared with conventional culture. As for the morality, it is about 12-15% immediately after the insertion operation, but thereafter it lowers to 4-5% an nually. This invention is greatly advantageous in view of contamination of natural seawater. Product pearls by this invention is superior in size and thickness of nacreous layer. Thus this invention permits the domestic culture of such pearls having as good quality as original product by golden lip shells (pinctada maxima) in South Seas area.

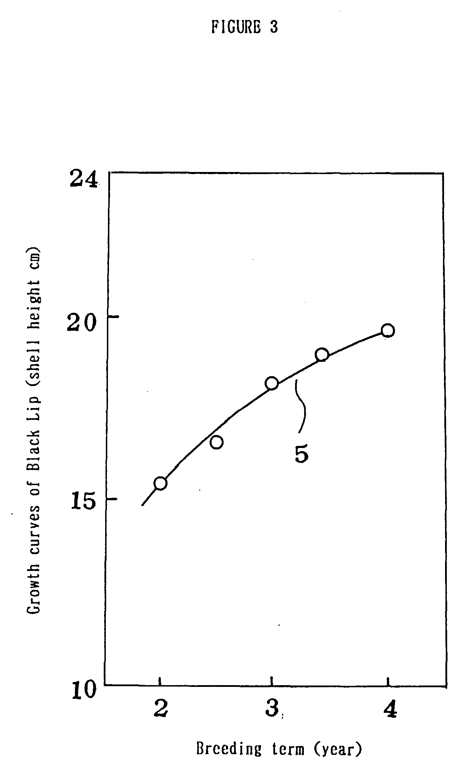

As for black lip shells (pinctada margaritifera), after the insertion operation of pallium piece from other shells capable of forming nacreous layer and nucleus, such shells were bred for 1 year in the same environments as in the previous golden lip shells (pinctada maxima) example, and the mortality, growth rate in reference to shell heights as well as nacreous layer formation were observed. Fig. 3 shows the growth rate in reference to change in shell heights (curve 5). A sample water collected from the rearing tank was tested to prove the result that bacteria belonging to the genus Acinectobactor, Vibrio, Flavobacterium, Pseudomonas were bread.

As is shown, black lip shells (pinctada margaritifera), when bred with the feed comprising defatted powder milk, Jew's marrow, and calcium carbonate, grew smooth and it is proved as a result that defatted powder milk is suitable as feed. The morality of the shells was about 10% immediately after the insertion operation and thereafter lowered to about 3-4% annually. The nacreous layer growth was visually observed to be smooth and has as good quality as product bred in natural seawater. Thus this invention permits the culture in other region than South Seas of such pearls having as good quality as original product by black lip shells (pinctada margaritifera) in South Seas, and other merits are much the same as in the example of golden lip shells (pinctada maxima).

The next example shows the case wherein fresh water mussel (hyriopsis schlegeli) called Ikechogai in Japanese, fresh water dwelling shell, were sit for the insertion operation of pallium piece from other shells capable of forming nacreous layer, after 2 years since the spore collection and bred in a small size aquarium tank for home use, containing freshwater with a space of 3-5 liters each shell. The aquarium tank is attached with a filter packed with activated carbon and coral sand, and devices for regulating water temperature, air blowing and fluorescent lamp illumination.

The freshwater is prepared by circulating dechlored tap water through the filter for some time, preferred is blend use of waters containing abundant bacteria bred through a long term culture and capable of promoting digestion of defatted milk by shells. Water temperature, pH condition, dissolved oxygen amount and other environmental conditions in the aquarium tank were regulated suitably to such breeding.

The feed comprising 5 wt. parts of mashed Jew's marrow. 20 wt. parts of fine powder calcium carbonate based on 100 wt. parts of defatted powder milk was given regularly into the rearing tank. Then, it is to be noted that Ikechogai (hyriopsis schlegeli) normally eat on plankton, necrocoenosis, or detritus. Fine particles dispersed in water and denatured entities by action of bacteria would be feed to Ikechogai (hyriopsis schlegeli), but in view of the fact that Ikechogai grow to produce high quality pearls when such shells are bred only with defatted powder milk for a long term, it is observed to be large causal that nutrients contained in defatted powder milk are so like those of plankton.

Similar to the cases of Akoyagai (pinctada martensii), mixing of Jew's marrow with defatted powder milk enhances choice to Ikechogai (hyriopsis schlegeli) and in turn the growth rate as well as forming rate of nacreous layer. As noted above, nutrients of Jew's marrow are different from those of plankton, but this acts as promotion to shells' intake and in turn to breeding bacteria or as breeding medium of bacteria. Calcium carbonate is added for promoting the growth of nacreous layers as in the case of Akoyagai (pinctada martensii).

In installation aspect, freshwater in the rearing tank is always re circulated to maintain environments suitable to Ikechogai (hyriopsis schlegeli), wherein a compact filter packed with activated carbon comprising coral sand is tied with the recirculation. Porous structure of activated carbon particles and coral sand is suitable as culture media for breeding bacteria to enhance choice to the shell. Further a main component of coral sand is calcium carbonate, which will partially dissolve out into water and supplement lost calcium component in water for the reason of intake by shells and avoid lowering of pH.

Since shell excrements and other floating entities turn to sediment and collect to tank bottom which is formed into like a funnel with gentle slope, regular opening of the vent valve or sucking out by the pipe was necessary for removal thereof. Other cares were taken such as regulation of water temperature to the optimum range of 22-23 °C and suspension of water recirculation after the feeding to accord shell habit, and fluorescent lamp illumination for prescribed time and lux.

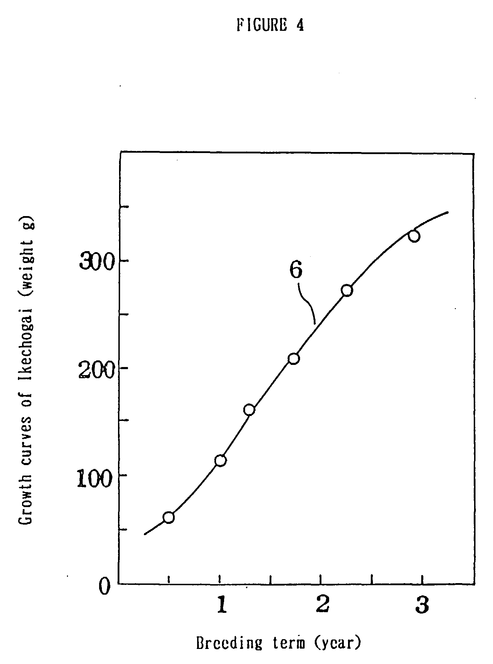

16 pieces of fresh water mussel (hyriopsis schlegeli) Ikechogai sit for pallium piece insertion collected from other shell were bred for 6 months in an aquarium pot for home use. In the meantime, the mortality occurred to only one piece and all others grew and formed good nacreous layer, as a result, 2 to 3 pieces of pearls having 6-8 mm were found each shell. This result is exceedingly faster growth than the breeding in natural environments and better quality with grown pearls. Thus such a small tank or aquarium may be used to joint purposes including enjoyment with tropical fish for home leisure. Fig. 4 shows an exemplary growth curve (curve 6) of Ikechogai (hyriopsis schlegeli) bred for a long term. Therein it is observed that bacteria the genus Acinectobactor, Vibrio, Flavobacterium, Pseudomonas were bred in tank water by a culture test.

The feed comprising defatted powder milk mixed with mashed Jew's marrow as was employed in the case wherein the pearl culture started with larvae or spat collected from natural lakes or artificial fertilization. Each shell grew up smooth and the mortality was remarkably lower than the breeding in natural lakes. As a result, it is observed that fine particles of defatted powder milk when sufficiently dispersed may turn to such a diameter as 0.12 µm, and that such fine particles may be taken into larvae or spat together with water.

## Claims

1. A process for aquaculture of pearls using seawater-dwelling bivalve shells with inserted nucleus and/or pallium piece collected from other shell capable of forming nacreous layer during stay in saline water having a composition substantially same composition as seawater or in seawater in a rearing installation built on land with use of feed comprising defatted milk as main component.

2. A process for aquaculture of pearls by rearing seawater-dwelling bivalve shells with inserted nucleus and/or pallium piece collected from other shell capable of forming nacreous layer during stay in saline water having a composition substantially same composition as seawater or in seawater in a rearing installation built on land in presence of bacteria including the genus Acinectobactor, Vibrio, Flavobacterium, and Pseudomonas, with use of feed comprising defatted milk as main component.

3. A process for aquaculture of pearls using seawater-dwelling bivalve shells with inserted nucleus and/or pallium piece collected from other shell capable of forming nacreous layer during stay in saline water having a composition substantially same composition as seawater or in seawater in a rearing installation built on land with use of feed comprising defatted milk. Jew's marrow, and/or calcium carbonate.

4. A process for aquaculture of pearls as claimed in claim 1, 2, or 3, wherein the seawater-dwelling bivalve shell is; pearl oyster shell (pinctada martensii) called Akoyagai in Japanese, black lip shell (pinctada margaritifera), golden lip shell (pinctada maxima), or another kind of pearl oyster shell (pinctada penguin) called Mabegai in Japanese.

5. A process for aquaculture of pearls using freshwater-dwelling bivalve shells with inserted nucleus and/or pallium piece collected from other shell capable of forming nacreous layer during stay in freshwater in a rearing installation built on land with use of feed comprising defatted milk as main component.

6. A process for aquaculture of pearls using freshwater-dwelling bivalve shells with inserted nucleus and/or pallium piece collected from other shell capable of forming nacreous layer during stay in freshwater in a rearing installation built on land with use of feed comprising defatted milk and Jew's marrow and/or calcium carbonate.

7. A process for aquaculture of pearls as claimed in claim 5 or 6, wherein the freshwater-dwelling bivalve shell is; fresh water mussel (hyriopsis schlegeli) called Ikechogai in Japanese, or another kind of fresh water mussel called Hireikechogai in Japanese.

8. A process for breeding mother shells or larvae or spat of shells for pearl culture, which comprising; culture of seawater-dwelling bivalves' larvae or spat collected in natural sea or bred by artificial fertilization and latching of mother shells, during stay in seawater or saline water having a composition substantially same as seawater stored in a rearing installation built on land; or culture of freshwater-dwelling bivalves' larvae or spat collected in natural rivers or lakes or bred by artificial fertilization and hatching of mother shells, during stay in freshwater stored in a rearing installation built on land; wherein feed comprising defatted milk as main component is used.

9. A pearl aquaculture installation built on land, which comprising: a rearing tank and a filter tied with recirculation of rearing tank water, wherein filter media comprises activated carbon or other carbonated material.

10. A pearl aquaculture installation built on land comprising: (A) a rearing tank, (B) a feed preparation tank, (C) a filter and (D) an environmental control board;
(A) the rearing tank being equipped, inside thereof, to pour feed liquor spraying over water surface and rearing water being partially removed from a vent disposed at the tank bottom and then sent to the filter, thereafter to eject filtered water through a jet pipe directed to be tangential to a side wall of the tank and disposed above the tank water surface so as to cause circulating flow, and the tank bottom being formed to be a funnel with gentle slope, wherein at the bottom center the vent is disposed for sediments or bottom lying water to be removed;
(B) the feed preparation tank being equipped with a scale for measuring the defatted powder milk, feeder, dissolving vessel equipped with stirrer;
(C) the filter comprising a media packed in the filter comprising at least one of filter media materials selected from the group consisting of the activated carbon, other carbonized materials, sand, and coral sand;
(D) the environmental control board being equipped with fluorescent lamp illumination control, tank water temperature control, air blow control, and other controllers related to operations for the installation.
